(19) Europäisches Patentamt
European Patent Office
Office européen des brevets

(11) Veröffentlichungsnummer: **0 117 422**
**B1**

(12) # EUROPÄISCHE PATENTSCHRIFT

(45) Veröffentlichungstag der Patentschrift: **08.10.86**

(51) Int. Cl.⁴: **C 09 D 3/80,** C 09 D 3/32

(21) Anmeldenummer: **84100691.9**

(22) Anmeldetag: **24.01.84**

(54) **Grundierungsmittel und seine Verwendung.**

(30) Priorität: **27.01.83 DE 3302767**

(43) Veröffentlichungstag der Anmeldung: **05.09.84 Patentblatt 84/36**

(45) Bekanntmachung des Hinweises auf die Patenterteilung: **08.10.86 Patentblatt 86/41**

(84) Benannte Vertragsstaaten: **AT BE CH DE FR GB IT LI NL SE**

(56) Entgegenhaltungen:
**DE - A - 1 285 652**
**DE - A - 2 355 813**
**DE - A - 3 315 787**
**US - A - 4 252 569**

**Die Akte enthält technische Angaben, die nach dem Eingang der Anmeldung eingereicht wurden und die nicht in dieser Patentschrift enthalten sind.**

(73) Patentinhaber: **WACKER-CHEMIE GMBH, Prinzregentenstrasse 22, D-8000 München 22 (DE)**

(72) Erfinder: **Singer, Robert, Dr. Dipl.-Chem., Hechenbergstrasse 35, D-8263 Burghausen (DE)**
Erfinder: **Goetze, Richard, Dr. Dipl.-Chem., Fraunhoferstrasse 23A, D-8263 Burghausen (DE)**
Erfinder: **Maier, Karl, Auer V. Welsbach Strasse 18, D-8263 Burghausen (DE)**
Erfinder: **Kerbl, Maximilian, Lindach 33, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 117 422 B1

**Beschreibung**

Die vorliegende Erfindung betrifft ein Grundierungsmittel für mineralische Untergründe, insbesondere für solche, die stark alkalisch reagieren, z.B. aufgrund ihres Gehaltes an noch nicht abreagierten hydraulischen Bindemitteln, wie Zement, Kalk o.ä.

Die genannten Untergründe besitzen im allgemeinen poröse Strukturen, wodurch beim Aufbringen von Beschichtungen zur Verbesserung der Haltbarkeit, zum Schutz der Oberfläche und/oder zur Verschönerung infolge der saugenden Eingenschaften des Untergrundes ein gleichmässiger Auftrag und befriedigende Beschichtung zumindest erschwert, wenn nicht sogar unmöglich gemacht wird. Auch werden solche Anstriche vielfach nach Eindringen von Feuchtigkeit in nicht vermeidbare Risse vom Untergrund wieder abgestossen.

Zur Vermeidung dieser Schwierigkeiten werden bereits Grundierungsmittel verschiedener Zusammensetzung eingesetzt, die die Beschichtung vom eigentlichen Untergrund isolieren sollen. Dies ist z.B. angebracht, wenn der Beschichtungsgrundstoff sich nicht mit dem Untergrund verträgt. Hierzu sei nur auf die bekannte Unverträglichkeit von Poly (organosiloxanen) mit stark alkalisch reagierenden Untergründen verwiesen und an die geringe Beständigkeit von Polyvinylestern in alkalischen Medien erinnert.

Vielfach wurden als Grundierungsmittel Lösungen organischer Polymeren in organischen Lösungsmitteln eingesetzt (vgl. DE-B- 16 71 280). Die gewünschte oben angesprochene Isolierwirkung wurde dabei jedoch nicht gefunden, da diese Lösungen von den Untergründen meist zur Gänze aufgesogen wurden. Ausserdem lässt sich ein Einsatz solcher Lösungen aus arbeits- und umwelthygienischen Gründen und aufgrund der Feuergefährlichkeit kaum mehr verantworten.

Auch ist bereits vorgeschlagen worden, wässrige Polymerdispersionen mit Polymerteilchen von etwa 0,02 bis 0,1 µm einzusetzen (vgl. z.B. DE-A-25 31 895), die auch ein befriedigendes Eindringvermögen zeigen, jedoch bei dichten Stellen des Untergrundes zur Glanzbildung neigen. Ausserdem ist die erzielte Verminderung der Wasseraufnahme oft nicht ausreichend, insbesondere bei Rissbildung, auch lässt sich oft die gewünschte Verfestigung des Untergrundes nicht erzielen.

Aufgabe der vorliegenden Erfindung war daher, ein Grundierungsmittel zur Verfügung zu stellen, das sowohl mit dem Untergrund als auch mit der Deckbeschichtung, z.B. einer Fassadenfarbe auch auf Dauer verträglich ist, das den Untergrund gleichzeitig gegen eindringende Feuchtigkeit schützt, das dem Untergrund gegenüber verfestigend wirkt und das hinsichtlich der arbeits- und umwelthygienischen und sicherheitstechnischen Risiken unbedenklich ist.

Diese Aufgabe wird in hervorragender Weise durch das in Anspruch 1 characterisierte Grundierungsmittel gelöst.

Die Vorteile dieses Mittels treten besonders deutlich beim Auftrag auf stark alkalischen mineralischen Untergründen, z.B. frischen Asbestzementoberflächen hervor, die anschliessend problemlos mit üblichen Schutzüberzügen oder Beschichtungen z.B. auf Kunstharzbasis überzogen werden können.

Das erfindungsgemässe Grundierungsmittel enthält, kolloidal gelöst in Wasser, mindestens ein alkalilösliches Acrylharz in Mengen von 4-15 Gewichtsteilen, vorzugsweise 6-9 Gewichtsteilen, 0,1 bis 1,5 vorzugsweise 0,15-0,5, Gewichtsteile Alkalimetallorganosilikonate, 4-40, vorzugsweise 4-15, Gewichtsteile, zumindest im Rahmen der vorliegenden Zusammensetzung wasserlöslicher organischer Lösungsmittel aus der Gruppe hydroxyl- und/oder carbonylgruppenhaltiger Verbindungen, Ammoniak und/oder organische Amine in solchen Mengen, dass der pH-Wert des Mittels mindestens 8, vorzugsweise 8-11, insbesondere 9-10 beträgt, gegebenenfalls 0,2 bis 1 Gewichtsteil eines oder mehrerer üblicher Entschäumer, sowie Wasser in solcher Menge, dass das Mittel dadurch auf 100 Gewichtsteile ergänzt wird.

Als Kunstharz kommen nur solche in Frage, die auch bei Lagerung über einen längeren Zeitraum im alkalischen pH-Bereich hydrolysestabil sind. Zu nennen sind hier Copolymere aus Einheiten, die sich von Estern der Acryl- und/oder Methacrylsäure mit Alkoholen mit 1 bis 8 C-Atomen und ungesättigten Carbonsäuren aus der Gruppe Acryl-, Methacryl-, Itakon-, Croton-, Malein- und/oder Fumarsäure ableiten. Die (Meth-) Acrylsäureester-Einheiten sind in Mengen von 86 bis 94, vorzugsweise 90 bis 94 Gewichts-%, die Carbonsäure-Einheiten in Mengen von 6 bis 14, vorzugsweise 6-10 Gew.% im Copolymeren enthalten (die Werte ergänzen sich zu 100 Gew.%). Als Monomere, die sich zur Herstellung obiger Copolymeren eignen, seien im einzelnen genannt: Methylacrylat, -methacrylat, Ethylacrylat, -methacrylat, Propylacrylat, -methacrylat, Butylacrylat, -methacrylat, Ethylhexylacrylat, -methacrylat, Hexylacrylat, -methacrylat, Acryl-, Methacryl-, Itakon-, Croton-, Malein- und Fumarsäure und Maleinsäureanhydrid. Bevorzugt werden die genannten Acrylate, Methacrylate, Acrylsäure und Methacrylsäure. Die geeigneten Copolymeren besitzen einen K-Wert nach Fikentscher von höchstens 50, vorzugsweise von 20 bis 45. Sie werden vorzugsweise nach dem Emulsions-Polymerisationsverfahren in wässriger Emulsion hergestellt.

Die zur Herstellung des erfindungsgemässen Grundierungsmittels eingesetzten Alkalimetallsilikonate können sich von beliebigen Alkalimetallen, d.h. von Lithium, Natrium, Kalium, Rubidium oder Cäsium ableiten. Vorzugsweise leiten sie sich von Natrium oder besonders vorzugsweise von Kalium ab. Sie können 1 bis 4 Alkalimetallatome je Siliciumatom enthalten. Die Verbindungen können monomere Verbindungen der allgemeinen Formel

$$R_a\ Si\ (OM)_{4-a} \qquad I$$

sein, worin M das Alkalimetallatom, R ein $C_1$-$C_4$ Alkylrest, z.B. ein Methyl oder Propyl, und a 0 oder 1 sind, und/oder polymere Verbindungen z.B. aus Einheiten der Formeln

$$R_a\ SiO_{0,5}\ (OM)_{3-a} \qquad II \text{ und}$$

$$R_a\ SiO\ (OM)_{2-a} \qquad III,$$

worin M, R und die angegebene Bedeutung haben, sein.

Gegebenenfalls kann ein Gemisch aus zwei oder mehreren verschiedenen Verbindungen der angegebenen Art angewandt sein. Gegebenenfalls können im Gemisch mit diesen vorstehend genannten Verbindungen auch Alkalimetallverbindungen von Organosilanolen verwendet werden, die durch Silcarban-Bindungen, z.B. Methylen-, Ethylen- oder Propylen-Gruppen verbundene Si-Atome aufweisen. Die Herstellung aller dieser Verbindungen ist bekannt.

Sofern reine Verbindungen der vorstehend genannten Arten eingesetzt werden, so besitzen sie jeweils eine Organogruppe je Si-Atom, bei Gemischen solcher Verbindungen ist der Durchschnittswert von a grösser als 0.

Für neutrale Untergründe werden bevorzugt Natrium- oder Kaliummethylsilikonat oder Natrium- oder Kaliumpropylsilikonat eingesetzt. Für stark alkalische Untergründe ist Kaliumpropylsilikonat besser geeignet und daher auch besonders bevorzugt.

Für die einfachere fehlerfreie Verarbeitung ist es manchmal bevorzugt, zusätzlich 0,2-1 Gew. -Teile, bezogen auf ein Gesamtgewicht von 100 Gewichtsteilen des erfindungsgemässen Mittels, Entschäumer zuzusetzen. Geeignete Entschäumer, die handelsüblich sind, sind dem Fachmann bekannt, bzw. können von ihm durch einige wenige routinemässige Vorversuche ausgewählt werden. Neben der Wirksamkeit und Verträglichkeit des Entschäumers ist dabei wichtig für die Auswahl, dass er durch die Verdünnung im Grundierungsmittel nicht zu stark ausschwimmt und sich gegebenenfalls gut wieder einarbeiten lässt, z.B. durch kurzes Umrühren.

Das erfindungsgemässe Grundierungsmittel, das als wässrige kolloidale Lösung vorliegt, enthält ausserdem organische Amine und/oder, besonders bevorzugt, Ammoniak bzw. deren korrespondierende protonierte Formen (korrespondierende Säuren gemäss der Brönsted-Theorie, vgl. Holleman-Wiberg «Lehrbuch der anorganischen Chemie», 81.-90. Auflage, Berlin - New York 1976, Seite 217), so dass der pH-Wert des Mittels mindestens 8 beträgt.

Als Amine seien primäre und sekundäre Amine der Formel $NR'_b H_{3-b}$ genannt, worin R' = $CH_3$, $C_2H_5$, n-$C_3H_7$, i-$C_3H_7$, n-$C_4H_9$, tert. -$C_4H_9$, sec. -$C_4H_9$ und b = 1 oder 2 bedeuten. Weiterhin geeignet sind Aminoalkohole (Hydroxyalkylamine), z.B. Aminoethanol, Aminopropanol, bzw. deren am Stickstoff durch Methyl- und/oder Ethylgruppen substituierten Derivate. Vorzugsweise enthält das erfindungsgemässe Grundierungsmittel jedoch Ammoniak, bzw. Ammoniumionen (als Reaktionsprodukt mit den anderen Bestandteilen des Grundierungsmittels, z.B. mit den Carboxylgruppen des Acrylharzes).

Schliesslich enthält das Grundierungsmittel noch zumindest im Rahmen der vorliegenden Zusammensetzung wasserlösliche organische Lösungsmittel aus der Gruppe hydroxyl- und/oder carbonylhaltiger Verbindungen, die nicht verseifbar sein sollen. Zu nennen sind Alkohole, Ketone, Glykolether und weniger bevorzugt Ester und Ketoester, bzw. Gemische dieser Verbindungen. Diese Lösungsmittel müssen zumindest in den angegeben Grenzen wassermischbar sein. Die Auswahl richtet sich nach der Anwendung. Bei der Verarbeitung bei Umgebungstemperatur, z.B. im Bereich bis 35 °C, werden Ethanol, Propanol und/oder Isopropanol, insbesondere bei industrieller Anwendung mit forcierter Trocknung, darüberhinaus auch schwerer flüchtige Verbindungen wie Butyldiglykol und/oder Diacetonalkohol oder Gemische dieser Verbindungen bevorzugt. Durch die Menge des Lösungsmittels kann in überraschend einfacher Weise die Eindringtiefe gesteuert werden. Im allgemeinen ist eine Menge im unteren Teil des genannten Mengenbereiches ausreichend und daher auch bevorzugt.

Es ist auch möglich, weitere Zusätze in dafür üblichen Mengen einzumischen, z.B. Biocide, insb. Fungicide, und Farbstoffe.

Das Mittel kann in jeder beliebigen üblichen Weise aufgebracht werden, z.B. durch Tauchen, Streichen, Aufsprühen, Giessen, Rakeln, Walzen und Spritzen.

Die Vorteile des erfindungsgemässen Grundierungsmittels werden durch die folgenden Beispiele verdeutlicht. Sie lassen sich wie folgt zusammenfassen:

Das Mittel ist verseifungsfest, in geschlossenen Gebinden praktisch unbegrenzt lagerfähig, lässt sich, da überwiegend wässrig, auch in geschlossenen Räumen praktisch ohne Brandgefahr und praktisch ohne arbeitsplatz- und umwelthygienische Bedenken verarbeiten, es ist mit mineralischen, auch stark alkalischen Untergründen wie auch mit darauf aufgebrachten üblichen Beschichtungen verträglich, vermittelt eine gute Haftung der Beschichtung auf dem Untergrund, ergibt gute Werte hinsichtlich der Wasserabweisung, auch bei Rissbildung in der Beschichtung, und bewirkt auch eine Verfestigung des Untergrundes. Letztendlich löst es in hervorragender Weise auch die ursprüngliche Aufgabe einer Grundierung für mineralische Untergründe, die Saugwirkung der Untergründe wird deutlich harabgesetzt.

Als weiterer Vorteil sei auch erwähnt, dass auch eine Lieferform des erfindungsgemässen Grundierungsmittels unter Verwendung von weniger Wasser hergestellt werden kann, wodurch bedeutende Einsparungen an Lagerkapazitäten möglich sind. Der Verarbeiter braucht dann zur Verarbeitung das erfindungsgemässe Grundierungsmittel nur dadurch aufzubereiten, indem er die Lieferform lediglich noch mit Wasser ggf. unter Zusatz von etwas Ammoniak und/oder Aminen auf die angegebene Verwendungskonzentration verdünnt. Beispielsweise kann die Lieferform mit nur einem Viertel, vorzugsweise Drittel, insbesondere der Hälfte des Wassers (in Abhängigkeit vom K-Wert), d.h. in bis zu doppelter, dreifacher oder gar vierfacher Konzentration hergestellt werden.

*Rezepturbeispiel 1* (erfindungsgemäss)

Es wurde ein mit Ammoniak auf einen pH-Wert von 9-9,5 eingestelltes Grundierungsmittel hergestellt aus

8 Gewichtsteilen eines Copolymeren mit einem K-Wert nach Fikentscher von ca. 45, das folgende Zusammensetzung aufwies:
46 Gew.-% Butylacrylat-Einheiten
46 Gew.-% Methylmethacrylat-Einheiten
8 Gew.-% Acrylsäure-Einheiten,

4,2 Gewichtsteilen eine Gemisches aus 4 Gewichtsteilen Butyldiglykol und
0,2 Gewichtsteilen Isopropanol,
0,2 Gewichtsteilen eines handelsüblichen Entschäumers auf Silikonbasis (SLM 54291, Wacker-Chemie GmbH, München, DE) und
0,18 Gewichtsteilen Kaliumpropylsilikonat (Wakker Silicon BS 20, Wacker-Chemie GmbH, München, DE)
in Wasser, so dass die Gesamtmenge des Grundierungsmittels 100 Gewichtsteile betrug.

*Rezepturbeispiel 2* (erfindungsgemäss)
Rezepturbeispiel 1 wurde dahingehend abgewandelt, dass statt des Gemisches aus Butyldiglykol und Isopropanol 10 Gewichtsteile Isopropanol und dass 0,16 Gewichtsteile Kaliumpropylsilikonat eingesetzt waren.

*Rezepturbeispiel 3* (erfindungsgemäss)
Rezepturbeispiel 2 wurde dahingehend abgewandelt, dass 15 Gewichtsteile Isopropanol enthalten waren.

*Rezepturbeispiel 4* (erfindungsgemäss)
Rezepturbeispiel 2 wurde dahingehend abgewandelt, dass der Gehalt an Copolymeren von 8 auf 11 Gewichtsteile erhöht war und das Copolymere einen K-Wert nach Fikentscher von 35 aufwies.

*Rezepturbeispiel A* (Vergleich)
Eine auf einen Festgehalt von 14 Gew.-% eingestellte Lösung eines Copolymeren aus 80 Gew.-% Vinylacetat- und 20 Gew.-% Vinyllaurat-Einheiten (Vinnapas® B 100/20 VLE, Wacker-Chemie GmbH, München, DE) in einem Lösungsmittelgemisch aus Estern, Alkoholen und Kohlenwasserstoffen mit einem Siedebereich unter 120°C [Sicherheitstechnische Kennzahlen der Vinnapas® -Lösung B 100/20 VLE: Verordnung über brennbare Flüssigkeiten (VbF): A1; Gefahrengutverordnung Eisenbahn (GGVE) 3,2; Zündgruppe G1, Zündtemperatur 460°C; MAK-Wert: 1400 mg/m$^3$; kennzeichnungspflichtig i. S. d. VO über gefährliche Arbeitsstoffe v. 8. 9. 1975 nach § 1 (1)/3 (Flamme)].

*Rezepturbeispiel B* (Vergleich)
Die Rezeptur A wurde zusätzlich mit 3,2 Gew.-%, bezogen auf Gesamtgewicht, eines Methylsilikonharzes (Wacker Silicon BS31, Wacker-Chemie GmbH, München, DE) versetzt.

*Rezepturbeispiel C* (Vergleich)
Rezeptur 2 wurde dahingehend abgewandelt, dass der Gehalt an Copolymer auf 12 Gewichtsteile und der an Isopropanol auf 20 Gewichtsteile gesteigert, aber das Silikonat weggelassen wurde.

*Rezepturbeispiel D* (Vergleich)
eine feinteilige Kunststoffdispersion auf Basis von Styrol-Acrylat-Copolymeren mit einem Feststoffgehalt von 8 Gew.-%.

*Beispiel 1*
Quader aus Gasbeton (10 cm × 5 cm × 2 cm) wurden 15 s in die Gundierungsmittel der Rezepturen 1 bzw. A getaucht, wobei jeweils etwa 8 g, entsprechend 640 mg Copolymer, aufgenommen wurden, und anschliessend 3 d lang bei Raumtemperatur getrocknet. Zur Prüfung wurden die Quader für die angegebene Zeitdauer unter Wasser gelagert und dann ausgewogen.

Die Ergebnisse sind in Tabelle 1 aufgelistet.

| Grundierung | Wasseraufnahme in Gew.-% bei Wasserlagerung über 5 min | 15 min |
|---|---|---|
| ohne | 31 | 42 |
| Rezeptur 1 | 4 | 12 |
| Rezeptur A | 24 | 34 |

*Beispiel 2*
Auf Gipsplatten werden mit dem Pinsel Grundierungsmittel gemäss den in Tabelle 2 angegebenen Rezepturen aufgetragen. Das Grundierungsmittel wurde mit «schlecht» beurteilt, wenn innerhalb von 10 min nicht mindestens 100 g des jeweiligen Mittels aufgebracht werden konnten. Die Beurteilung «sehr gut» bis «mittel» geben an, inwieweit Glanzflecken entstanden.

Die Verfestigung wurde mit einem Kratzgerät gemessen, dessen Dorn mit verschiedenen Gewichten belastbar ist. Je besser der Untergrund verfestigt wurde, desto geringer war die Breite der Kratzfurche. Die Prüfungen wurde nach Trocknung von 3 d bei Raumtemperatur durchgeführt.

Die Wasserabweisung wurde mittels der Wassertropfenprobe bestimmt. Dabei wird die Zeitspanne gemessen, in der 2 ml Wasser vom Prüfkörper völlig aufgesogen werden.

TABELLE 2

| Rezeptur | Wassertropfenprobe (min) | Kratztest mit Belastung 2 kg | 5 kg | Eindringen |
|---|---|---|---|---|
| 2 | 150 | 1,0 mm | 1,9 mm | sehr gut |
| 3 | 300 | 1,0 mm | 2,0 mm | mittel-gut |
| 4 | >240 | 1,0 mm | 1,5 mm | gut |
| A | 15 | 1,2 mm | 2,3 mm | gut |
| B | >240 | 1,2 mm | 2,1 mm | gut |
| C | 100 | 0,7 mm | 1,8 mm | mittel-schlect |
| D | 10 | 1,2 mm | 2,0 mm | gut |

*Beispiel 3*
Unbehandelte Asbestzementplatten wurden 15 s in die jeweiligen Grundierungsmittel eingetaucht. Überschüssige Grundierung wurde zwischen zwei Walzen abgestreift. Danach wurden die Platten 10 min bei 130°C getrocknet. Die Prüfung der Wasseraufnahme analog Beispiel 1 erfolgte nach 24 h zusätzlicher Lagerung bei Raumtemperatur (siehe Tabelle 3).

TABELLE 3

| Rezeptur | Wasseraufnahme in Gew.-% nach Wasserlagerung über Bemerkungen 15 min | 60 min |
|---|---|---|
| 1 | 4,0 | 12,0 |
| A | 16,5 | 17,0 |
| B | 15,5 | 17,5 |
| D | nicht bestimmbar, da Grundierung gequollen und teilweise abgelöst | |

**Patentansprüche**

1. Verseifungsfestes und lagerstabiles Grundierungsmittel für mineralische Untergründe auf Basis kolloidaler wässriger Lösungen von Gemischen aus Kunstharzen, Silikonaten, organischen Lösungsmitteln und weiteren zum Teil üblichen Zusatzstoffen, dadurch gekennzeichnet, dass 100 Gewichtsteile des Grundierungsmittels neben Wasser

4-15 Gewichtsteile alkalilöslicher Acrylharze mit 86 bis 94 Gewichtsprozent Einheiten, die sich von Acryl- und/oder Methacrylsäure-$C_1$ bis -$C_8$ -alkylestern ableiten, und 6-14 Gewichtsprozent Einheiten, die sich von Acryl-, Methacryl-, Itakon-, Croton-, Malein- und/oder Fumarsäure ableiten, und mit K-Werten nach Fikentscher von höchstens 50,

4-40 Gewichtsteile zumindest im Rahmen der vorliegenden Zusammensetzung wasserlöslicher organischer Lösungsmittel aus der Gruppe hydroxyl- und/oder carbonylgruppenhaltiger Verbindungen,

0,1-1,5 Gewichtsteile Alkalimetallorganosilikonate, sowie

Ammoniak und/oder organische Amine in solchen Mengen enthalten, dass der pH-Wert des Grundierungsmittels mindestens 8 beträgt.

2. Verwendung des Grundierungsmittels nach Anspruch 1 zur Oberflächenbehandlung stark alkalischer mineralischer Untergründe.

**Claims**

1. Primer for mineral substrates that is stable to hydrolysis and to storage and is based on colloidal aqueous solutions of mixtures of synthetic resins, siliconates, organic solvents and further, in some cases customary, additives, characterised in that 100 parts by weight of the primer contains, in addition to water,

from 4 to 15 parts by weight of alkali-soluble acrylic resins comprising from 86 to 94% by weight of units derived from $C_1$ to $C_8$ alkyl esters of acrylic and/or methacrylic acid, and from 6 to 14% by weight of units derived from acrylic, methacrylic, itaconic, crotonic, maleic and/or fumaric acid, and having a K-value according to Fikentscher of not more than 50,

from 4 to 40 parts by weight of organic solvents that are water-soluble at least in the context of the present composition and are selected from the group consisting of compounds containing hydroxy and/or carbonyl groups,

from 0,1 to 1,5 parts by weight of alkali metal organosiliconates, and

ammonia and/or organic amines in sufficient quantities that the pH of the primer is at least 8.

2. Use of the primer according to claim 1 for the surface treatment of strongly alkaline mineral substrates.

**Revendications**

1. Apprêt stable au stockage et résistant à la saponification, pour supports minéraux, à base de solutions aqueuses colloïdales de mélanges de résins synthétiques, de siliconates, de solvants organiques et d'autres additifs, dont certains sont classiques, apprêt caractérisé en ce que 100 parties en poids de celui-ci contiennent, en dehors de l'eau:

4-15 parties en poids de résines acryliques solubles dans les alcalins, contenant de 86 à 94% en poids de motifs dérivant d'acrylates et/ou de méthacrylates d'alkyles en $C_1$-$C_8$ et de 6 à 14% en poids de motifs dérivants d'acides acrylique, méthacrylique, itaconique, crotonique, maléique et/ou fumarique, et présentant une valeur K selon Fikentscher au plus égale à 50,

4-40 parties en poids d'un solvant organique soluble dans l'eau au moins dans le cadre des compositions envisagées, appartenant au groupe des composés contenant des groupes hydroxy et/ou carbonyle,

0,1-1,5 parties en poids d'organosiliconates de métaux alcalins,

ainsi que de l'ammoniac et/ou des amines organiques en quantités telles que le pH de l'apprêt soit au moins égale à 8.

2. Utilisation de l'apprêt selon la revendication 1 pour le traitement de surface de support minéraux très alcalins.